# EUROPEAN PATENT SPECIFICATION

(11) **EP 3 244 654 B1**
(45) Date of publication and mention of the grant of the patent: **12.08.2020**
(21) Application number: 17170034.7
(22) Date of filing: 09.05.2017
(51) Int. Cl.: H04W 28/18, H04W 16/14, H04W 36/00, H04W 48/16

(54) **SHARED SPECTRUM ACCESS**
GEMEINSAMER SPEKTRUMSZUGANG
ACCÈS À UN SPECTRE PARTAGÉ

(30) Priority: 12.05.2016 EP 16169358
(43) Date of publication of application: 15.11.2017
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: ZHANG, Haibin, 2274 EA Voorburg (NL); Litjens, Remco, 2352 VH Voorschoten (NL); TRICHIAS, Konstantinos, 2517 VH The Hague (NL)
(74) Representative: Wuyts, Koenraad Maria

(56) References cited:
- WO-A1-2015/168028
- US-A1- 2013 208 587
- US-A1- 2014 301 351

## Description

### Field of the Invention

The present invention relates to shared spectrum access. More in particular, the present invention relates to a method and a device for controlling access of nodes to at least two coexisting wireless communication systems configured to share a frequency spectrum.

### Background of the Invention

A wireless communication system typically has a designated frequency spectrum, of which it is the sole user in a certain area or region. In some cases, however, wireless frequency systems may share a frequency spectrum. This may, for example, be the case in a so-called unlicensed frequency spectrum, where two or more wireless communication systems may coexist and share a common frequency spectrum.

A well-known example of frequency spectrum sharing is LTE-U (Long Term Evolution - Unlicensed) which is a wireless communication system designed to use an unlicensed frequency band, such as a band used by Wi-Fi (5 GHz in some countries). By using a frequency spectrum already populated by Wi-Fi devices, the bandwidth of an LTE system can be increased. However, the coexistence of multiple wireless communication systems in a shared frequency spectrum may cause problems. One such problem is ensuring fairness of the use of the shared frequency spectrum: it would be undesired if one wireless communication system were to obtain almost exclusive use of the shared spectrum, at the expense of the other wireless communication system or systems.

United States patent application US 2007/0223508 discloses a method of providing spectrum allocation fairness in a wireless network using an unlicensed communication spectrum. This Prior Art method includes co-locating a plurality of wireless systems, determining the bandwidth requirements of each of the systems and allocating a bandwidth or a communication period to each of the systems for a particular interval.

The method of US 2007/0223508 achieves spectrum fairness by allocating, to each of the coexisting wireless communication systems, bandwidth proportional to their requirements. Although such a method may achieve a measure of overall fairness, it ignores the spatial distribution of the nodes of the wireless communication systems. That is, nodes will typically not be evenly distributed in the coverage area of a wireless communication system, and some nodes may experience more traffic than others. Thus, even if overall fairness is achieved, locally one of the wireless communication systems may be able to claim a disproportional share of the frequency spectrum, to the detriment of the other wireless communication system or systems.

Further examples of LTE and WIFI coexistence mechanisms are disclosed in US 2013/0208587 A1, US 2014/0301351 A1 and WO 2015/168028 A1.

### Summary of the Invention

The invention is defined by the appended claims. It is an object of the present invention to solve this problem by providing a method of controlling access of nodes to at least two coexisting wireless communication systems, which coexisting wireless communication systems are configured to share a frequency spectrum in a common coverage area, wherein each node is configured to access at least one wireless communication system in dependence of at least one access parameter, wherein the common coverage area is divided into at least two zones, and wherein each node in the common coverage area is associated with at least one zone, the method comprising: a control unit collecting usage data indicative of usage of the shared frequency spectrum by the nodes, the control unit determining, by using the usage data, a relationship between the respective shared frequency spectrum usages of the wireless communication systems per zone, the control unit determining for each zone, by using the relationship between the respective frequency spectrum usages, at least one access parameter configured to allow at least one node associated with the respective zone access to at least one of the coexisting wireless communication systems, and the control unit transmitting the access parameters to the respective nodes.

By dividing the coverage area of the coexisting wireless communication systems into at least two zones, it becomes possible to control the access of nodes per zone, each zone being controlled separately, using at least one access parameter per zone. This, in turn, allows fairness and other criteria to be controlled per zone, thus providing an increased ability to control the coexisting wireless communication systems.

By determining a relationship between the respective shared frequency spectrum usages of the wireless communication systems per zone, based upon the usage data provided by the nodes, a fairness measure may be established, which may in turn be used to control and adjust the access of nodes per zone.

It is noted that each node is associated with a zone in that a node may communicate using the (at least one) access parameter of that zone. Each node may be associated with a single zone only, although examples may be envisaged in which a node may be associated with two or more zones, either simultaneously or successively. The control unit may determine the value of the at least one access parameter per zone. In case two or more access parameters are used per zone, the control unit may determine which access parameter is, or which access parameters are, used per zone. That is, the control unit may select at least one access parameter for a zone, the selection being based upon the relationship between the respective frequency spectrum usages for that particular zone.

It is further noted that a node may be a mobile unit (such as a handset) or a fixed unit (such as a base station). A node may be able to communicate via one or more of the available communication systems. A zone may be determined by geographical borders (such as country borders), by physical borders (such as walls of a room or a building), by a range of one or more fixed wireless nodes, and/or by a combination of one or more borders and/or ranges.

According to the invention, access of the nodes to the shared frequency spectrum is controlled per zone, using a relationship between the shared frequency spectrum usages of at least a first wireless communication system and a second wireless communication system in a zone. This relationship may therefore also be determined per zone and may involve all wireless communication systems in a particular zone, or may be established per pair of wireless communication systems in a particular zone. The relationship may involve one or more parameters per zone.

In an example, the relationship may involve respective shared frequency spectrum occupation times of the coexisting wireless communication systems. In such an embodiment, the relationship may be a ratio of the shared spectrum occupation times.

In the same or another example, the relationship may involve respective performances of the coexisting wireless communication systems. In such an example, performance parameters such as throughput, speech quality and/or latency may be used.

The relationship may be established to determine whether the existing access of the nodes to the shared frequency spectrum is appropriate under the circumstances. This may imply that all active nodes in a zone have at least a minimum amount of access, which minimum amount may represent a threshold value. In some embodiments, the control unit may be configured for determining the access parameters such that the relationship is substantially equal to a predetermined ratio. This ratio may be 50% in the case of two wireless communication systems, but may also be equal to 25% or 10%, for example. In addition, this ratio may be chosen individually per zone and may therefore differ between zones. It is noted that in addition to active nodes which access the shared frequency spectrum, there may be idle nodes which do not access the spectrum.

As mentioned above, the at least one control unit collects usage data indicative of usage of the shared frequency spectrum by the nodes. To this end, at least some nodes may be configured to report usage data to the at least one control unit. Some or all nodes may be configured to report usage data of the zone these nodes are associated with. Alternatively, or additionally, some or all nodes may be configured to report usage data of another zone, for example a zone adjacent to the zone they are associated with. This allows less reporting nodes to be used.

In some examples, a single control unit is used which may be shared between the zones. In other examples, some or all zones may be provided with an individual control unit. Although providing individual control units requires more hardware resources, it may allow a better control of the access parameters of the individual zones.

The method according to the invention may further comprise: the control unit instructing a node to disassociate from a zone and to associate with another zone, for example an adjacent zone, or a non-adjacent zone. That is, the association between a node and its zone may be terminated, and a new association with another zone may be initiated. Associating with another zone may be advantageous when, for example, there are many active nodes in a particular zone and less active nodes in the other zone. As mentioned before, associating with a zone may imply using the access parameters of that zone.

In an example, the coexisting wireless communication systems may comprise Wi-Fi and LTE, preferably LTE-U (Long Term Evolution - Unlicensed) or LTE - LAA (Long Term Evolution - Licensed Assisted Access). The present invention is particularly suitable for coexisting Wi-Fi and LTE-U systems, as it offers a solution for the fairness problem introduced by utilizing an unlicensed frequency spectrum. However, other wireless communication systems may also be used, such as UMTS and Bluetooth®, and wireless communication systems which are currently under development.

The invention also provides a method for a node to access at least one of at least two coexisting wireless communication systems, which coexisting wireless communication systems are configured to share a frequency spectrum in a common coverage area, wherein each node is configured to access at least one wireless communication system in dependence of at least one access parameter, wherein the common coverage area is divided into at least two zones, and wherein each node in the common coverage area is associated with at least one zone, the method comprising: transmitting usage data indicative of usage of the shared frequency spectrum in its zone to a control unit, receiving at least access parameter from the control unit, and accessing at least one wireless communication system in dependence of the at least one received access parameter.

The invention further provides a software program product including instructions which allow a processor to carry out one or more of the methods described above. The software program product may include a tangible carrier, such as a DVD or a USB stick. Alternatively, the software program product may be stored on a server from which it may be downloaded using the Internet. The software program product contains software instructions which can be carried out by the processor of a device, such as a server, a user device (for example a smartphone), and/or a monitoring device.

The present invention yet further provides a control unit configured for controlling access to at least two coexisting wireless communication systems, which coexisting wireless communication systems are configured to share a frequency spectrum in a common coverage area, wherein each node is configured to access at least one wireless communication system in dependence of at least one access parameter, wherein the common coverage area is divided into at least two zones, and wherein each node in the common coverage area is associated with at least one zone, the control unit comprising: a receiving unit configured for receiving usage data indicative of usage of the shared frequency spectrum, a determination unit configured for:
- determining, by using the usage data, a relationship between the respective shared frequency spectrum usages of the wireless communication systems per zone,and
- determining for each zone, by using the relationship between the respective frequency spectrum usages, at least one access parameter configured to allow at least one node associated with the respective zone access to at least one of the coexisting wireless communication systems, and
a transmission unit configured for transmitting the access parameters to the respective nodes.

The present invention additionally provides a node configured for access to at least one of at least two coexisting wireless communication systems, which coexisting wireless communication systems are configured to share a frequency spectrum in a common coverage area, wherein the common coverage area is divided into at least two zones, and wherein the node is configured to associate with at least one zone when in the common coverage area, the node comprising: an association unit configured for associating the node with a zone, a transmission unit configured for transmitting usage data indicative of usage of the shared frequency spectrum to a control unit, a receiving unit for receiving at least one access parameter from the control unit, and an access control unit configured to access at least one wireless communication system in dependence of the at least one access parameter.

The node may be a mobile node, for example an LTE User Equipment or a Wi-Fi client. However, the node may alternatively be a fixed node, for example an LTE Evolved Node B or a Wi-Fi Access Point.

The present invention additionally provides a wireless communication system, comprising at least one control unit as described above and at least one node as described above. A wireless communication system according to the invention may be capable of allowing controlled access of its nodes when sharing a frequency spectrum with another wireless communication system.

It is noted that the invention relates to all possible combinations of features recited in the claims.

### Brief description of the drawings

The present invention will further be explained with reference to exemplary embodiments illustrated in the drawings, in which:
Fig. 1 schematically shows a first example of a coverage area of coexisting wireless communication systems which is divided into zones in accordance with the invention.
Fig. 2 schematically shows a second example of a coverage area of wireless communication systems which is divided into zones in accordance with the invention.
Fig. 3 schematically shows a control unit for controlling access to coexisting wireless communication systems in accordance with the invention.
Fig. 4 schematically shows a method of controlling access to coexisting wireless communication systems in accordance with the invention.
Fig. 5 schematically shows a method of accessing coexisting wireless communication systems in accordance with the invention.
Figs. 6a & 6b schematically show frequency spectra which are shared between coexisting wireless communication systems in accordance with the invention.
Fig. 7 represents a schematic block diagram of a general system to be employed in the disclosed method.
Fig. 8 schematically shows a computer program product in accordance with the present invention.

### Detailed description of embodiments

The invention provides a method of controlling access of nodes to two or more wireless communication systems which may be configured to share a frequency spectrum in a common coverage area and thus may coexist in the common coverage area. Access of the nodes, which may be fixed and/or mobile, to one or more of the wireless communication systems may be governed by at least one access parameter. In accordance with the invention, the common coverage area may be divided into at least two zones, while each node in the common coverage area may be associated with at least one zone. A control unit may be configured for collecting usage data indicative of usage of the shared frequency spectrum by the nodes. Based on the usage data, a relationship between the respective shared frequency spectrum usages of the wireless communication systems per zone may be determined. Based on the relationship between the respective frequency spectrum usages, at least one access parameter per zone may be configured to allow one or more nodes access to at least one of the coexisting wireless communication systems. Access may be allowed per zone, and may further be allowed for a certain time period and/or for a certain part of the shared frequency spectrum.

The method of the invention allows the spatial distribution of the nodes using the shared frequency spectrum to be taken into account when granting access to this shared frequency spectrum.

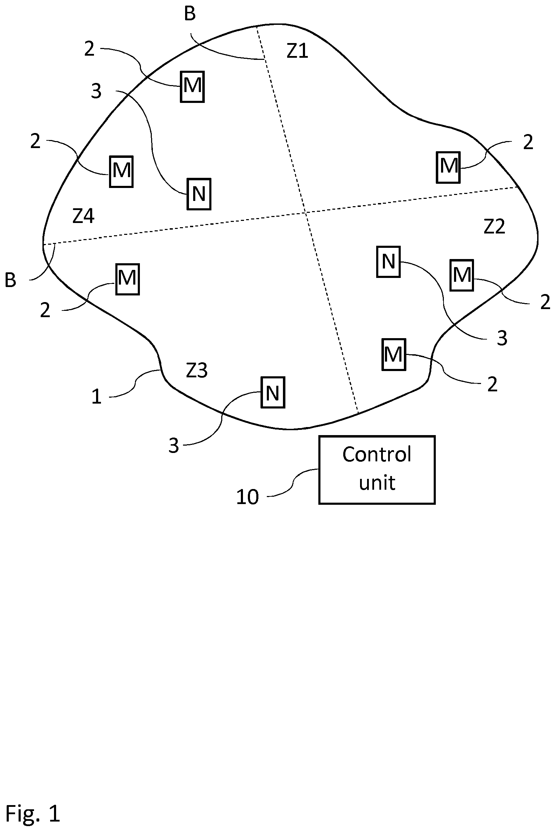

An example of a common coverage area of two wireless systems is schematically illustrated in Fig. 1. The common coverage area 1 may be described as the area where the individual coverage areas of two or more wireless systems overlap, and hence where a node may be able to communicate with all of the wireless systems, provided access to the wireless systems were granted. Although three or more wireless systems may have a common coverage area, for the sake of simplicity only two wireless systems will be discussed in the examples below.

In the example of Fig. 1, the common coverage area is divided into four zones Z1, ..., Z4. The borders B between the zones Z1, ..., Z4 may be determined by walls of a building or of several buildings, for example. In other embodiments, zones may be determined by transmission ranges and/or by other factors. However, although the geographical boundaries of the zones may be determined by walls and/or ranges, the functional boundaries of the zones may be determined by one or more access parameters, as will be discussed below. The geographical boundaries and the functional boundaries of the zones may be substantially identical, but in some embodiments the geographical boundaries and the functional boundaries need not coincide.

In the common coverage area, one or more nodes are present. A node may be a mobile (M) node 2 (which is typically but not necessarily portable) or a network (N) node 3 (which is typically but not necessarily stationary). In an LTE or LTE-U system, for example, a mobile node may be referred to as user equipment (UE) while a network node may be referred to as evolved NodeB (eNodeB). In a Wi-Fi system, for example, a mobile node may be referred to as station (STA) while a network node may be referred to as access point (AP). In Fig. 1, mobile nodes 2 are labelled "M" while network nodes 3 are labelled "N".

In accordance with the invention, each node in the common coverage area may be associated with a zone, and will typically be associated with a single zone. When a node is associated with a zone, it may use the access parameters of that zone. In the example of Fig. 1, when a mobile node 3 is associated with zone Z4, then it may use the access parameters of zone Z4, which access parameters may be provided by a network node 3 in zone Z4.

A node which is associated with a particular zone will typically be physically located in that zone, although it may also be located in the vicinity of that zone. In addition, a node which is associated with a particular zone may measure usage data of that zone, and may report measured usage data to a control unit of that zone. Access to the shared frequency spectrum is in a particular zone controlled by at least one access parameter which may be unique for that zone. In some embodiments, at least one access parameter may be shared between at least two zones. If more than one access parameter is used to control access to the shared frequency spectrum, at least one access parameter may be unique for each zone while at least one other access parameter may be shared between two or more zones. In some embodiments, a node may measure and report usage data of another zone than the one it is associated with, for example an adjacent zone.

In the exemplary embodiment of Fig. 1, a single control unit 10 is configured to collect the usage data from all zones Z1 - Z4. In other embodiments, more than one control unit may be provided, each control unit serving only a single zone or multiple zones. The usage data may represent the usage of the shared frequency spectrum by the nodes. The control unit may be configured to derive the shared spectrum usage per zone and per wireless communication system from the usage data.

A node which reports usage data may be a mobile node 2 or a network node 3. A node may be configured to only report its own usage data to the control unit 5. In some embodiments, one or more network nodes 3 may be configured to forward the usage data of the mobile nodes in their respective zones, for example. A wired network may be used to transmit usage data from network nodes 3 to the one or more control units 10, but a wireless network may additionally or alternatively be used.

The control unit 10 may be configured to determine a relationship between the usage of the shared frequency spectrum by each wireless communication system. More in particular, the control unit 10 may be configured to determine this relationship per zone. Thus, for each zone, the control unit 10 may establish an individual relationship. The control unit 10 may use this individual usage relationship per zone to determine at least one individual access parameter per zone, which access parameter controls the access of each node to at least one of the wireless communication systems in the shared frequency spectrum. That is, the at least one access parameter may determine how much bandwidth of the shared frequency spectrum a particular node may use, and/or for which time duration, when communicating via a particular wireless communication system.

For example, a usage relationship may involve at least one of:
- respective shared frequency spectrum occupation times of the coexisting wireless communication systems;
- respective objective and/or subjective performances of the coexisting wireless communication systems.
Objective and subjective performance tests are well known in the art.

In some embodiments, a node may report usage data via another zone, that is, via a zone the node is not associated with. For example, a node 2 associated with the third zone Z3 in Fig. 1 may report its usage data via a network node 3 in the fourth zone Z4, a zone the node 2 is not associated with. This may be done to save bandwidth in a particular zone, for example, and/or to utilize the proximity of a node in an adjacent zone. Therefore, although nodes may report usage data through the zone they are associated with, they may in some cases additionally and/or alternatively report usage data through another zone.

Instead of, or in addition to reporting measured usage data of its own zone via another zone, it possible for a node to measure usage data of another zone, for example an adjacent zone, and report the measured usage data of the other zone via its own zone, via the other zone of which the usage data were measured, or via yet another zone.

In some embodiments, the association of a node may be changed, for example from the zone it is physically located in to an adjacent zone. This may be done, for example, when a mobile (or portable) device, such as a laptop computer equipped with Wi-Fi facilities, moves from one zone to another zone. The access assigned to nodes by using access parameters may also depend on the number of zones sharing a control unit.

In some embodiments, nodes may use a directional antenna to facilitate the use of a particular zone for reporting usage data.

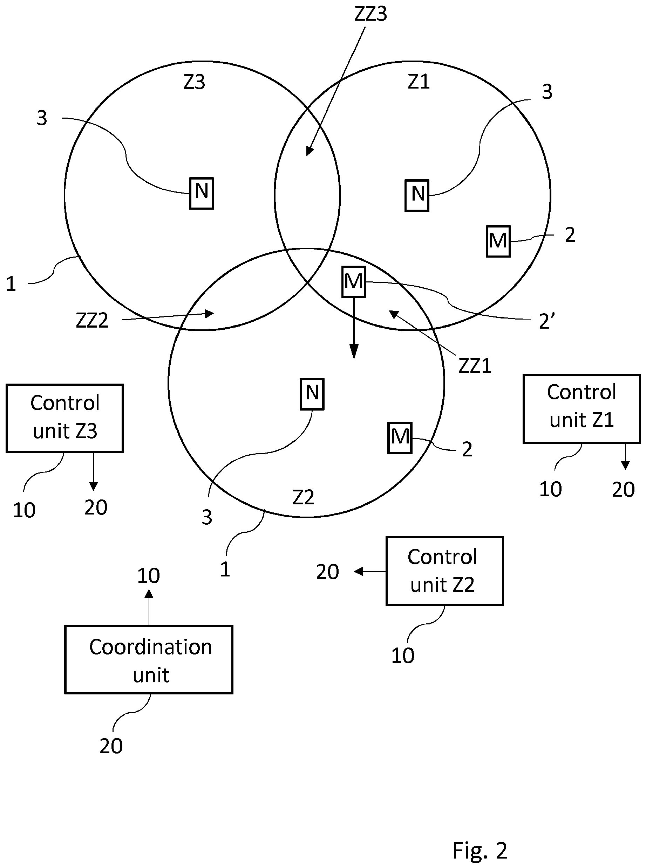

In the embodiment of Fig. 1, the zones may primarily be determined by physical boundaries, such as walls. In the embodiment of Fig. 2, the zones may primarily be determined by transmission ranges. More in particular, the three zones Z1, Z2 and Z3 of Fig. 2 are determined by the transmission ranges of the network nodes 3. The zones have overlap regions ZZ1, ZZ2 and ZZ3. Together, the three zones Z1, Z2 and Z3 constitute a common coverage area 1. Nodes which are physically located in the overlap regions ZZ1, ZZ2 and ZZ3 may be associated with a single zone only. This may allow a control unit to select one of the overlapping zones when a node is located in an overlap region.

In the embodiment of Fig. 2, three control units 10 are used, one for each zone. The control units 10 may be configured for collecting usage data from the zones and determining access data for the nodes. The control units 10 may be configured for exchanging usage data and/or access parameters so as to be able to coordinate the shared spectrum access in the three zones.

An optional coordination unit 20 may be provided to coordinate the actions of the control units 10. To this end, the coordination unit 20 may receive first data from the control units 10 and may transmit second data to the control units. The first data may include usage data while the second data may include access parameter control data allowing the control units 10 to set and/or adjust the access parameters of the nodes. In particular, the coordination unit 20 may determine which zone each node is associated with, that is, from which control unit 10 a node should accept access parameters.

Mobile nodes may travel from one zone to another. In the example of Fig. 2, the mobile node 2' moves from the first zone Z1 through an overlap region ZZ1 to the second zone Z2. In the first zone Z1, the node 2' may be associated with the zone Z1, but in the second zone Z2, the node 2' may be associated with the zone Z2. Upon leaving the overlap region ZZ1, the association of the node 2' may be changed from zone Z1 into zone Z2, which may imply that the node 2' disassociates from the first zone Z1. In an embodiment, a control unit 10, such as the control unit of the second zone Z2, may determine whether the association should be changed into an association with the second zone Z2. This may depend on the number of nodes already associated with the second zone Z2, and with the shared spectrum usage in both the first zone Z1 and the second zone Z2. In some embodiments, the coordination unit 20 may determine whether the association of a node with a particular zone should be changed into an association with another zone. In some embodiments, the node itself may determine whether its association with a particular zone should be changed into an association with another zone. The zone a node is associated with may be indicated by a zone identification, which zone identification may be contained in the access parameter or in a set of access parameters transmitted to a node.

As mentioned above, the at least one control unit 10 may determine a relationship between the respective usages of the shared frequency spectrum per zone, and per wireless communication system. In case the wireless communication systems are LTE and Wi-Fi, for example, the control unit of the second zone Z2 determines the usage of both LTE and Wi-Fi by the nodes in the second zone Z2. The term "usage" may comprise, for example, usage of bandwidth (such as bits per second and/or frequency channels) and/or usage of time (such as time slots and/or transmission times).

More in particular, usage data may include at least one of:
- spectrum occupation times of individual nodes;
- spectrum occupation times of each of the at least two coexisting wireless communication systems;
- the overall total occupation times of the shared spectrum (by all the coexisting systems);
- data throughput or other objective/subjective performance indicators of individual nodes;
- data throughput or other objective/subjective performance indicators of each of the at least two coexisting wireless communication systems;
- the overall data throughput or other objective/subjective performance indicators (of all the coexisting systems).

The at least one control unit 10 may further determine a relationship between the respective usages of the shared frequency spectrum. The relationship may be a ratio, for example, or a difference. For example, the relationship may indicate that in the second zone Z2, LTE uses up 80% of the available bandwidth while Wi-Fi uses up 20% (assuming that there is no unused bandwidth). Expressed in a ratio, the relationship may be stated as LTE/Wi-Fi = 80/20 = 4. The control unit (or control units) may use this relationship to adjust the access parameters, if necessary, for example to allow Wi-Fi nodes more access to Wi-Fi and to allow LTE nodes less access to LTE. It is noted that dual system nodes may be capable of accessing two communication systems (such as Wi-Fi and LTE) substantially simultaneously, and that triple system nodes may be capable of accessing three communication systems substantially simultaneously. In the case of multiple system nodes, such as dual system nodes and triple system nodes, the control unit (or control units) may use the relationship between the respective usages of the shared frequency spectrum to adjust the access parameters, if necessary, for example to allow the nodes more access to Wi-Fi and less access to LTE.

The relationship determined by the control unit on the basis of the usages may be compared with a reference, such as a predetermined ratio, to establish whether the actual ratio is "fair". That is, it may be decided that it is not fair if for access via Wi-Fi only 20% of the available bandwidth is available. Instead of, or in addition to comparing the relationship derived from the usage data with a predetermined relationship, such as a predetermined ratio, the derived relationship may be input into a machine learned model, for example.

If the control unit determines that the derived relationship is not, or not substantially equal to the desired relationship (for example, the LTE/Wi-Fi bandwidth ratio equals 4 while a ratio of less than 3 is desired), then the control unit adjusts access parameters of the nodes. That is, access of the nodes in the common coverage area to the shared frequency spectrum may be controlled by access parameters. Such an access parameter may determine whether access to a certain wireless communication system is allowed, and/or how much bandwidth is available for that node to access a particular wireless communication system. An access parameter may block the access of a node to a particular wireless communication system, but may generally limit the access, if necessary.

By controlling the access of the nodes, per zone, to the wireless communication systems, a "fair" use of the shared frequency spectrum can be achieved.

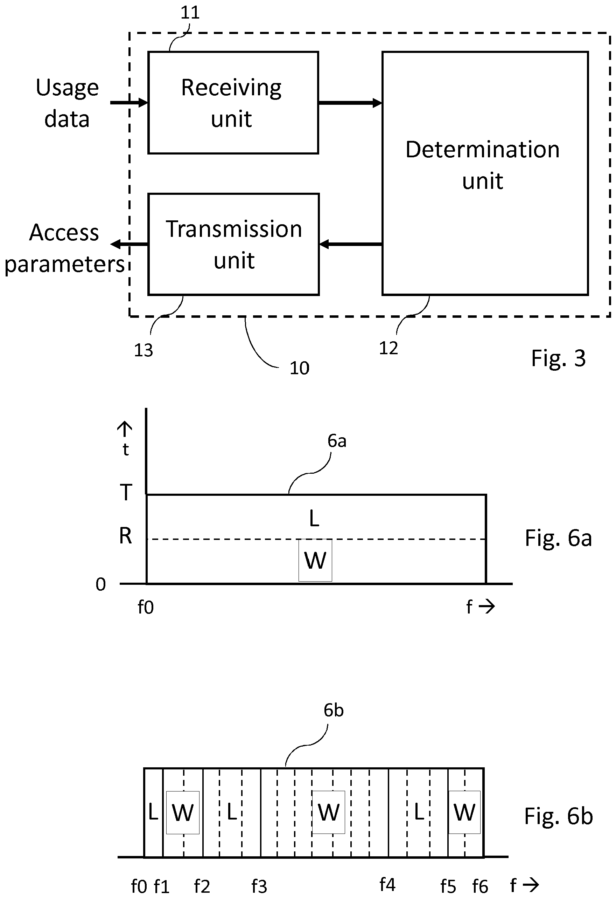

An exemplary embodiment of a control unit 10 is schematically illustrated in Fig. 3. The control unit 10 is shown to include a receiving unit 11 configured for receiving usage data, a determination unit 12 for determining a relationship and corresponding access parameters, and a transmission unit 13 for transmitting the determined access parameters to the nodes.

The determination unit 12 may include a processor and an associated memory containing instructions which allow the processor to carry out the method steps of the invention. More in particular, the determination unit 12 may be configured for determining for a zone, by using the relationship between the respective frequency spectrum usages, at least one access parameter configured to allow at least one node associated with the respective zone access to at least one of the coexisting wireless communication systems.

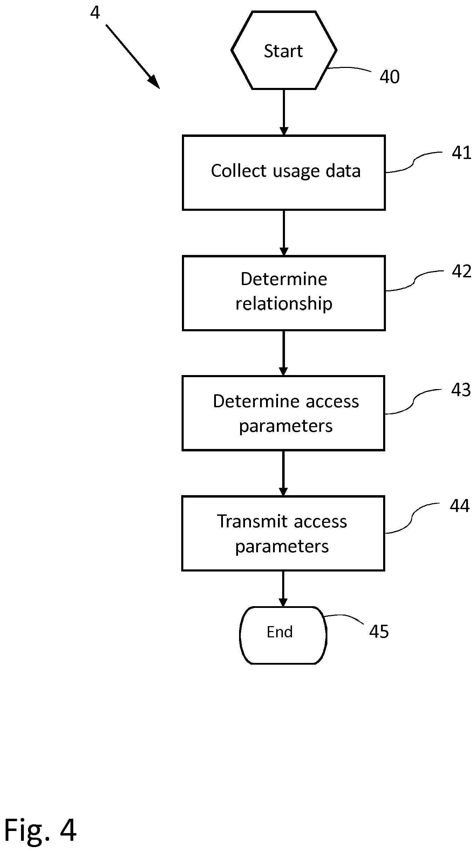

An exemplary embodiment of a method of controlling access of nodes is illustrated in Fig. 4. The method 4 of Fig. 4, which may be carried out by a control unit (5 in Fig. 1), includes an initial action 40 in which the method is initiated. In an action 41 usage data are collected from the nodes in at least one zone, the usage data representing use of the shared frequency spectrum. In an action 42 the collected usage data are used to determine a relationship between the shared frequency spectrum usages per zone.

In an action 43 the relationship thus determined is used to determine access parameters per zone, in order to achieve "fairness" per zone. In some cases, when the relationship is already determined to be "fair" and the access parameters need no adjustment, no new access parameters may be determined. In general, action 43 may include comparing the relationship determined in action 42 with a desired relationship, or a similar action, upon which an actual determination of (new) access parameters may or may not be carried out. In action 44, any new access parameters are transmitted to the nodes. The method ends with action 45.

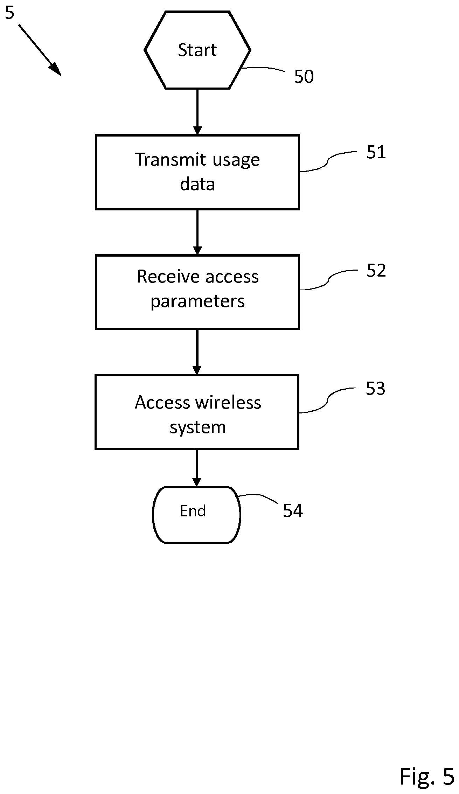

An exemplary embodiment of a method of accessing coexisting wireless communication systems is illustrated in Fig. 5. The method 5 of Fig. 5, which may be carried out by a node (2 or 3 in Fig. 1), includes an initial action 50 in which the method is initiated and usage data may be collected. In an action 51, the node transmits collected usage data to a control unit. In an action 52, the node receives (altered or unaltered) access parameters in return. In an action 52, the node access at least one of the coexisting wireless communication systems using the received access parameters.

An example of the use of a frequency spectrum which is shared between two coexisting wireless communication networks is schematically illustrated in Fig. 6a, where the X-axis represents frequency (f) and the Y-axis represents time (t). The shared frequency spectrum 6a of Fig. 6a is shown to extend over a frequency range starting with a base frequency f0. In addition, the shared frequency spectrum 6a is shown to extend over time, starting at t=0 and ending at t=T. In the example of Fig. 6a, a ratio R is determined which represents a fair use of the shared frequency spectrum 6a. In the example shown, R approximately equals 0.5T, but this value is arbitrary.

Initially, from t=0 to t=R, the shared frequency spectrum is exclusively used by Wi-Fi (W). That is, all nodes associated with a certain zone which use the shared frequency spectrum 6a communicate via Wi-Fi only. Then, at t=R, the Wi-Fi communication is terminated (as determined by the access parameter(s)) and communication via LTE (L in Fig. 6a) is initiated. LTE communication lasts until t=T. As can be seen, this use of the shared frequency spectrum is a form of time multiplexing.

Another example of the use of a frequency spectrum which is shared between two coexisting wireless communication networks is schematically illustrated in Fig. 6b. A first frequency channel, extending from frequency f0 to frequency f1, is used by a first wireless communication system, for example LTE (L). Two further frequency channels, extending from frequency f1 to frequency f2, are used by a second wireless communication system, for example Wi-Fi (W). Three further channels are used by LTE, the following seven channels are used by Wi-Fi, the next three by LTE and the last two, which extend from frequency f5 to frequency f6, by Wi-Fi. In this particular example, seven channels are used by LTE and eleven by Wi-Fi. Thus, a LTE/Wi-Fi ratio equals 3/7 = 43%.

Instead of, or in addition to, using frequency channels to determine a relationship between the systems, other units may be used, such as time slots, throughput, etc..

The invention also provides a method of controlling access of nodes to at least two coexisting wireless communication systems, which coexisting wireless communication systems are configured to share a frequency spectrum in a common coverage area, wherein each node is configured to access at least one wireless communication system in dependence of at least one access parameter, the method comprising:
dividing the common coverage area into at least two zones, and
associating each node in the common coverage area with at least one zone.
The dividing and associating may be carried out by a control unit configured for:
collecting usage data indicative of usage of the shared frequency spectrum by the nodes,
for determining, by using the usage data, a relationship between the respective shared frequency spectrum usages of the wireless communication systems per zone,
for determining for each zone, by using the relationship between the respective frequency spectrum usages, at least one access parameter configured to allow at least one node associated with the respective zone access to at least one of the coexisting wireless communication systems, and
for transmitting the access parameters to the respective nodes.
In some embodiment, the dividing and associating may be carried out iteratively, by creating new zones and determining the usage relationships of those zones until satisfactory relationships have been found.

It is noted that the access parameters may include, for example, at least one of:
- the minimum and maximum values of the contention window used in LBT (Listen Before Talk);
- the maximally allowed channel occupation time when a node obtains access to a part (that is, channel) of the shared frequency spectrum; and
- the eCCa (extended Clear Channel assessment) defer time.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, for example, stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

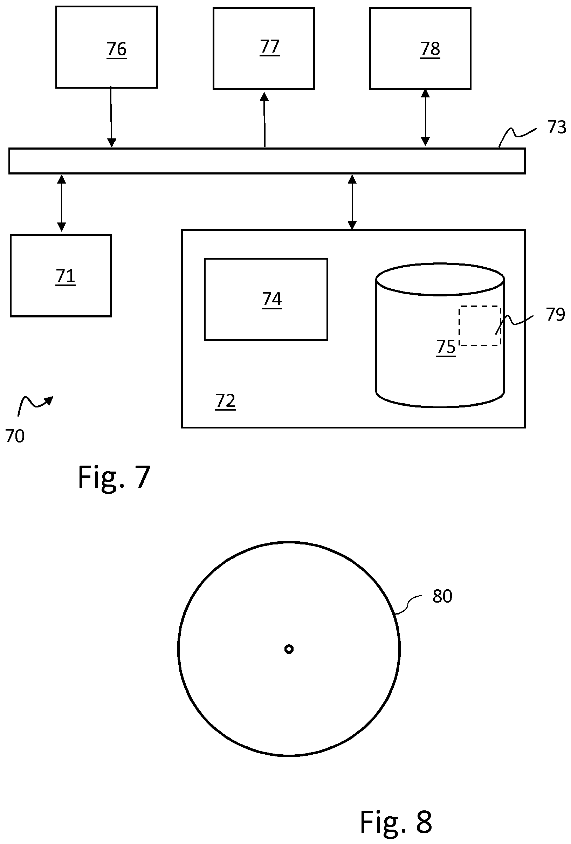

Fig. 7 shows a block diagram illustrating an exemplary data processing system that may be used as a part of a user equipment or as a network node, such as base station.

Data processing system 70 may include at least one processor 71 coupled to memory elements 72 through a system bus 73. As such, the data processing system 70 may store program code within memory elements 72. Further, processor 71 may execute the program code accessed from memory elements 72 via system bus 73. In one aspect, data processing system 70 may be implemented as a computer that is suitable for storing and/or executing program code. It should be appreciated, however, that data processing system 70 may be implemented in the form of any system including a processor and memory that is capable of performing the functions described within this specification.

Memory elements 72 may include one or more physical memory devices such as, for example, local memory 74 and one or more bulk storage devices 75. Local memory may refer to random access memory or other non-persistent memory device(s) generally used during actual execution of the program code. A bulk storage device 75 may be implemented as a hard drive or other persistent data storage device. The data processing system 70 may also include one or more cache memories (not shown) that provide temporary storage of at least some program code in order to reduce the number of times program code must be retrieved from bulk storage device 75 during execution.

Input/output (I/O) devices depicted as input device 77 and output device 77 optionally can be coupled to the data processing system 70. Examples of input devices may include, but are not limited to, for example, a keyboard, a pointing device such as a mouse, a touchscreen, or the like. Examples of output device may include, but are not limited to, for example, a monitor or display, speakers, or the like. Input device 77 and/or output device 77 may be coupled to data processing system 70 either directly or through intervening I/O controllers. A network adapter 78 may also be coupled to data processing system 70 to enable it to become coupled to other systems, computer systems, remote network devices, and/or remote storage devices through intervening private or public networks. The network adapter 78 may comprise a data receiver for receiving data that is transmitted by said systems, devices and/or networks to said data processing system 70 and a data transmitter for transmitting data to said systems, devices and/or networks. Modems, cable modems, and Ethernet cards are examples of different types of network adapters that may be used with data processing system 70.

As pictured in FIG. 7, memory elements 72 may store an application 79. It should be appreciated that data processing system 70 may further execute an operating system (not shown) that can facilitate execution of the application. Applications implemented in the form of executable program code can be executed by data processing system 70, for example, by processor 71. Responsive to executing the application 79, the data processing system 70 may be configured to perform one or more operation as disclosed in the present application in further detail.

In one aspect, for example, data processing system 70 may represent a multipoint transmission control system MTC or a user device UE. In that case, application 79 may represent a client application that, when executed, configures data processing system 70 to perform the various functions described herein with reference to an MTC or a user equipment. Examples of an MTC include a base station of a telecommunications network 1 providing cellular wireless access, for example a NodeB or an eNB. The user equipment can include, but is not limited to, a personal computer, a portable computer, a mobile phone, or the like.

In another aspect, data processing system 70 may represent a transmission node TN as described herein, in which case application 79, when executed, may configure data processing system 70 to perform operations as described in the present disclosure.

A computer program product 80 is schematically illustrated in Fig. 8. The exemplary computer program product 80 is shown to include a tangible data carrier, such as a DVD or equivalent carrier, on which instructions are stored which allow a processor to carry out one or more methods according to the invention.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The abstract should not be used to limit the scope of the claims, and neither should reference numbers in the claims.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiments were chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (for example, read-only memory devices within a computer such as CD-ROM disks readable by a CD-ROM drive, ROM chips or any type of solid-state non-volatile semiconductor memory) on which information is permanently stored; and (ii) writable storage media (for example, flash memory, floppy disks within a diskette drive or hard-disk drive or any type of solid-state random-access semiconductor memory) on which alterable information is stored.

It will therefore be understood by those skilled in the art that the present invention is not limited to the embodiments mentioned above and that many additions and modifications are possible without departing from the scope of the invention as defined in the appending claims.

## Claims

1. A method (4) of controlling access of nodes (2, 3) to at least two coexisting wireless communication systems,
which coexisting wireless communication systems are configured to share a frequency spectrum in a common coverage area (1),
wherein each node is configured to access at least one wireless communication system in dependence of at least one access parameter, wherein
the common coverage area is divided into at least two geographically defined zones (Z1, Z2, Z3, Z4), and
wherein each node in the common coverage area is associated with at least one geographically defined zone,
the method comprising:
a control unit collecting (41) usage data indicative of usage of the shared frequency spectrum by the nodes in the geographically defined zone,
the control unit determining (42), by using the usage data, a relationship between the respective shared frequency spectrum usages of the wireless communication systems per geographically defined zone,
the control unit determining (43) for each geographically defined zone, by using the relationship between the respective frequency spectrum usages, at least one access parameter configured to allow at least one node associated with the respective geographically defined zone access to at least one of the coexisting wireless communication systems, and
the control unit transmitting (44) the access parameters to the respective nodes.

2. The method according to claim 1, wherein the relationship involves respective shared frequency spectrum occupation times of the coexisting wireless communication systems.

3. The method according to claim 1 or 2, wherein the relationship involves respective performances of the coexisting wireless communication systems.

4. The method according to any of the preceding claims, wherein the control unit is configured for determining the access parameters such that the relationship is substantially equal to a predetermined ratio.

5. The method according to any of the preceding claims, wherein each geographically defined zone is provided with a separate control unit.

6. The method according to any of the preceding claims, wherein at least some nodes are configured to report usage data to the control unit.

7. The method according to claim 6, wherein a node is configured to report usage data of the geographically defined zone it is associated with.

8. The method according to claim 6 or 7, wherein a node is configured to report usage data of a geographically defined zone adjacent to the geographically defined zone it is associated with.

9. The method according to any of the preceding claims, further comprising:
the control unit instructing a node to disassociate from a geographically defined zone and to associate with another geographically defined zone.

10. The method according to any of the preceding claims, wherein the coexisting wireless communication systems comprise Wi-Fi and LTE.

11. A method (5) for a node (2, 3) to access at least two coexisting wireless communication systems,
which coexisting wireless communication systems are configured to share a frequency spectrum in a common coverage area (1),
wherein each node is configured to access at least one wireless communication system in dependence of at least one access parameter, wherein
the common coverage area is divided into at least two geographically defined zones (Z1, Z2, Z3, Z4), and
wherein each node in the common coverage area is associated with at least one geographically defined zone,
the method comprising:
transmitting (51) usage data indicative of usage of the shared frequency spectrum in its geographically defined zone to a control unit,
receiving (52) at least one access parameter from the control unit, and
accessing (53) at least one wireless communication system in dependence of the at least one received access parameter.

12. A software program product comprising instructions allowing a processor to carry out the method according to any of the preceding claims.

13. A control unit (10) configured for controlling access to at least two coexisting wireless communication systems,
which coexisting wireless communication systems are configured to share a frequency spectrum in a common coverage area,
wherein each node is configured to access at least one wireless communication system in dependence of at least one access parameter, wherein
the common coverage area(1) is divided into at least two geographically defined zones (Z1, Z2, Z3, Z4), and
wherein each node in the common coverage area is associated with at least one geographically defined zone,
the control unit comprising:
a receiving unit (11) configured for receiving usage data indicative of usage of the shared frequency spectrum in the geographically defined zone,
a determination unit (12) configured for:
- determining, by using the usage data, a relationship between the respective shared frequency spectrum usages of the wireless communication systems per geographically defined zone, and
- determining for each geographically defined zone, by using the relationship between the respective frequency spectrum usages, at least one access parameter configured to allow at least one node associated with the respective zone access to at least one of the coexisting wireless communication systems, and
a transmission unit (13) configured for transmitting the access parameters to the respective nodes.

14. A node (2, 3) configured for access to at least two coexisting wireless communication systems,
which coexisting wireless communication systems are configured to share a frequency spectrum in a common coverage area, wherein
the common coverage area (1) is divided into at least two geographically defined zones (Z1, Z2, Z3, Z4), and
wherein the node is configured to associate with at least one geographically defined zone when in the common coverage area,
the node comprising:
an association unit configured for associating the node with a geographically defined zone,
a transmission unit configured for transmitting usage data indicative of usage of the shared frequency spectrum in the geographically defined zone to a control unit,
a receiving unit for receiving at least one access parameter from the control unit, and
an access control unit configured to access at least one wireless communication system in dependence of the at least one access parameter.

15. The node according to claim 14, which is a mobile node.

16. The node according to claim 14 or 15, which is a fixed node.

17. A wireless communication system, comprising at least one control unit according to claim 13 and at least one node according to any of claims 14 to 16.

## Patentansprüche

1. Verfahren (4) zum Steuern des Zugriffs von Knoten (2, 3) auf mindestens zwei koexistierende drahtlose Kommunikationssysteme,
wobei die koexistierenden drahtlosen Kommunikationssysteme konfiguriert sind, in einem gemeinsamen Abdeckungsbereich (1) ein Frequenzspektrum gemeinsam zu nutzen,
wobei jeder Knoten konfiguriert ist, in Abhängigkeit von mindestens einem Zugriffsparameter auf mindestens ein drahtloses Kommunikationssystem zuzugreifen,
wobei der gemeinsame Abdeckungsbereich in mindestens zwei geographisch definierte Zonen (Z1, Z2, Z3, Z4) aufgeteilt ist und
wobei jeder Knoten in dem gemeinsamen Abdeckungsbereich mindestens einer geographisch definierten Zone zugeordnet ist,
wobei das Verfahren Folgendes umfasst:
eine Steuereinheit, die Nutzungsdaten sammelt (41), die eine Nutzung des gemeinsam genutzten Frequenzspektrums durch die Knoten in der geographisch definierten Zone anzeigen,
die Steuereinheit, die unter Verwendung der Nutzungsdaten eine Beziehung zwischen den jeweiligen Nutzungen des gemeinsam genutzten Frequenzspektrums der drahtlosen Kommunikationssysteme pro geographisch definierter Zone bestimmt (42),
die Steuereinheit, die für jede geographisch definierte Zone unter Verwendung der Beziehung zwischen den jeweiligen Frequenzspektrum-Nutzungen mindestens einen Zugriffsparameter bestimmt (43), der konfiguriert ist, mindestens einem Knoten, der der jeweiligen geographisch definierten Zone zugeordnet ist, zu erlauben, auf mindestens eines der koexistierenden Kommunikationssysteme zuzugreifen, und
die Steuereinheit, die die Zugriffsparameter zu den jeweiligen Knoten überträgt (44).

2. Verfahren nach Anspruch 1, wobei die Beziehung jeweilige Belegungszeiten des gemeinsam genutzten Frequenzspektrums der koexistierenden drahtlosen Kommunikationssysteme beinhaltet.

3. Verfahren nach Anspruch 1 oder 2, wobei die Beziehung jeweilige Leistungen der koexistierenden drahtlosen Kommunikationssysteme beinhaltet.

4. Verfahren nach einem der vorhergehenden Ansprüche, wobei die Steuereinheit konfiguriert ist, die Zugriffsparameter derart zu bestimmen, dass die Beziehung im Wesentlichen gleich einem vorbestimmten Verhältnis ist.

5. Verfahren nach einem der vorhergehenden Ansprüche, wobei jede geographisch definierte Zone mit einer separaten Steuereinheit versehen ist.

6. Verfahren nach einem der vorhergehenden Ansprüche, wobei zumindest einige Knoten konfiguriert sind, der Steuereinheit Nutzungsdaten zu melden.

7. Verfahren nach Anspruch 6, wobei ein Knoten konfiguriert ist, Nutzungsdaten der geographisch definierten Zone, der er zugeordnet ist, zu melden.

8. Verfahren nach Anspruch 6 oder 7, wobei ein Knoten konfiguriert ist, Nutzungsdaten einer geographisch definierten Zone, die neben der geographisch definierten Zone, der er zugeordnet ist, liegt, zu melden.

9. Verfahren nach einem der vorhergehenden Ansprüche, das ferner Folgendes umfasst:
die Steuereinheit, die einen Knoten anweist, sich von einer geographisch definierten Zone zu trennen und sich mit einer anderen geographisch definierten Zone zu verbinden.

10. Verfahren nach einem der vorhergehenden Ansprüche, wobei die koexistierenden drahtlosen Kommunikationssysteme Wi-Fi und LTE umfassen.

11. Verfahren (5) zum Zugriff eines Knotens (2, 3) auf mindestens zwei koexistierende drahtlose Kommunikationssysteme,
wobei die koexistierenden drahtlosen Kommunikationssysteme konfiguriert sind, in einem gemeinsamen Abdeckungsbereich (1) ein Frequenzspektrum gemeinsam zu nutzen,
wobei jeder Knoten konfiguriert ist, in Abhängigkeit von mindestens einem Zugriffsparameter auf mindestens ein drahtloses Kommunikationssystem zuzugreifen,
wobei der gemeinsame Abdeckungsbereich in mindestens zwei geographisch definierte Zonen (Z1, Z2, Z3, Z4) aufgeteilt ist, und
wobei jeder Knoten in dem gemeinsamen Abdeckungsbereich mindestens einer geographisch definierten Zone zugeordnet ist,
wobei das Verfahren Folgendes umfasst:
Übertragen (51) von Nutzungsdaten, die die Nutzung des gemeinsam nutzten Frequenzspektrums in seiner geographisch definierten Zone anzeigen, zu einer Steuereinheit,
Empfangen (52) mindestens eines Zugriffsparameters von der Steuereinheit, und
Zugreifen (53) auf mindestens ein drahtloses Kommunikationssystem in Abhängigkeit von dem mindestens einen empfangen Zugriffsparameter.

12. Software-Programmprodukt, das Anweisungen umfasst, die einem Prozessor erlauben, das Verfahren nach einem der vorhergehenden Ansprüche auszuführen.

13. Steuereinheit (10), die konfiguriert ist, den Zugriff auf mindestens zwei koexistierende drahtlose Kommunikationssysteme zu steuern,
wobei die koexistierenden drahtlosen Kommunikationssysteme konfiguriert sind, in einem gemeinsamen Abdeckungsbereich (1) ein Frequenzspektrum gemeinsam zu nutzen,
wobei jeder Knoten konfiguriert ist, in Abhängigkeit von mindestens einem Zugriffsparameter auf mindestens ein drahtloses Kommunikationssystem zuzugreifen,
wobei der gemeinsame Abdeckungsbereich (1) in mindestens zwei geographisch definierte Zonen (Z1, Z2, Z3, Z4) aufgeteilt ist, und
wobei jeder Knoten in dem gemeinsamen Abdeckungsbereich mindestens einer geographisch definierten Zone zugeordnet ist,
wobei die Steuereinheit Folgendes umfasst:
eine Empfangseinheit (11), die konfiguriert ist, Nutzungsdaten zu empfangen, die die Nutzung des gemeinsam nutzten Frequenzspektrums in der geographisch definierten Zone anzeigen,
eine Bestimmungseinheit (12), die konfiguriert ist,
- unter Verwendung der Nutzungsdaten eine Beziehung zwischen den jeweiligen Nutzungen des gemeinsam nutzten Frequenzspektrums der Kommunikationssysteme pro geographisch definierter Zone zu bestimmen, und
- unter Verwendung der Beziehung zwischen den jeweiligen Frequenzspektrum-Nutzungen, für jede geographisch definierte Zone mindestens einen Zugriffsparameter zu bestimmen, der konfiguriert ist, mindestens einem Knoten, der der jeweiligen Zone zugeordnet ist, zu erlauben, auf mindestens eines der koexistierenden drahtlosen Kommunikationssysteme zuzugreifen, und
eine Übertragungseinheit (13), die konfiguriert ist, die Zugriffsparameter zu den jeweiligen Knoten zu übertragen.

14. Knoten (2, 3), der konfiguriert ist, auf mindestens zwei koexistierende drahtlose Kommunikationssysteme zuzugreifen,
wobei die koexistierenden drahtlosen Kommunikationssysteme konfiguriert sind, ein Frequenzspektrum in einem gemeinsamen Abdeckungsbereich gemeinsam zu nutzen,
wobei der gemeinsame Abdeckungsbereich (1) in mindestens zwei geographisch definierte Zonen (Z1, Z2, Z3, Z4) aufgeteilt ist, und
wobei der Knoten konfiguriert ist, sich mit mindestens einer geographisch definierten Zone zu verbinden, wenn er sich in dem gemeinsamen Abdeckungsbereich befindet,
wobei der Knoten Folgendes umfasst:
eine Zuordnungseinheit, die konfiguriert ist, den Knoten einer geographisch definierten Zone zuzuordnen,
eine Übertragungseinheit, die konfiguriert ist, Nutzungsdaten, die die Nutzung des gemeinsam nutzten Frequenzspektrums in der geographisch definierten Zone anzeigen, zu einer Steuereinheit zu übertragen,
eine Empfangseinheit zum Empfangen mindestens eines Zugriffsparameters von der Steuereinheit, und
eine Zugriffssteuerungseinheit, die konfiguriert ist, in Abhängigkeit von dem mindestens einen Zugriffsparameter auf mindestens ein drahtloses Kommunikationssystem zuzugreifen.

15. Knoten nach Anspruch 14, der einem mobilen Knoten entspricht.

16. Knoten nach Anspruch 14 oder 15, der einem festen Knoten entspricht.

17. Drahtloses Kommunikationssystem, das mindestens eine Steuereinheit nach Anspruch 13 und mindestens einen Knoten nach einem der Ansprüche 14 bis 16 umfasst.

## Revendications

1. Procédé (4) de commande de l'accès de nœuds (2, 3) à au moins deux systèmes de communication sans fil coexistants,
lesquels systèmes de communication sans fil coexistants sont configurés pour partager un spectre de fréquences dans une zone de couverture commune (1),
chaque nœud étant configuré pour accéder à au moins un système de communication sans fil en fonction d'au moins un paramètre d'accès, la zone de couverture commune étant divisée en au moins deux zones géographiquement définies (Z1, Z2, Z3, Z4), et
chaque nœud dans la zone de couverture commune étant associé à au moins une zone géographiquement définie, le procédé comprenant :
une unité de commande collectant (41) des données d'utilisation indiquant l'utilisation du spectre de fréquences partagé par les nœuds dans la zone géographiquement définie,
l'unité de commande déterminant (42), en utilisant les données d'utilisation, une relation entre les utilisations partagées respectives du spectre des fréquences des systèmes de communication sans fil par zone géographique définie,
l'unité de commande déterminant (43) pour chaque zone géographiquement définie, en utilisant la relation entre les utilisations respectives du spectre des fréquences, au moins un paramètre d'accès configuré pour permettre à au moins un nœud associé à la zone géographiquement définie respective d'accéder à au moins un des systèmes de communication sans fil coexistants, et
l'unité de commande transmettant (44) les paramètres d'accès aux nœuds respectifs.

2. Procédé selon la revendication 1, la relation impliquant des temps d'occupation du spectre de fréquences partagés respectifs des systèmes de communication sans fil coexistants.

3. Procédé selon la revendication 1 ou 2, la relation impliquant les performances respectives des systèmes de communication sans fil coexistants.

4. Procédé selon l'une quelconque des revendications précédentes, l'unité de commande étant configurée pour déterminer les paramètres d'accès de telle sorte que la relation est sensiblement égale à un rapport prédéterminé.

5. Procédé selon l'une quelconque des revendications précédentes, chaque zone géographiquement définie étant pourvue d'une unité de commande séparée.

6. Procédé selon l'une quelconque des revendications précédentes, au moins certains nœuds étant configurés pour rapporter des données d'utilisation à l'unité de commande.

7. Procédé selon la revendication 6, un nœud étant configuré pour rapporter des données d'utilisation de la zone géographiquement définie à laquelle il est associé.

8. Procédé selon la revendication 6 ou 7, un nœud étant configuré pour rapporter des données d'utilisation d'une zone géographiquement définie adjacente à la zone géographiquement définie à laquelle il est associé.

9. Procédé selon l'une quelconque des revendications précédentes, comprenant en outre :
l'unité de commande donnant instruction à un nœud de se dissocier d'une zone géographiquement définie et de s'associer à une autre zone géographiquement définie.

10. Procédé selon l'une quelconque des revendications précédentes, les systèmes de communication sans fil coexistants comprenant le Wi-Fi et le LTE.

11. Procédé (5) destiné à un nœud (2, 3) pour accéder à au moins deux systèmes de communication sans fil coexistants,
lesquels systèmes de communication sans fil coexistants sont configurés pour partager un spectre de fréquences dans une zone de couverture commune (1),
chaque nœud étant configuré pour accéder à au moins un système de communication sans fil en fonction d'au moins un paramètre d'accès, la zone de couverture commune étant divisée en au moins deux zones géographiquement définies (Z1, Z2, Z3, Z4), et
chaque nœud dans la zone de couverture commune étant associé à au moins une zone géographiquement définie,
le procédé comprenant :
la transmission (51) de données d'utilisation indiquant l'utilisation du spectre de fréquences partagé dans sa zone géographiquement définie à une unité de commande,
la réception (52) d'au moins un paramètre d'accès de l'unité de commande, et
l'accès (53) à au moins un système de communication sans fil en fonction de l'au moins un paramètre d'accès reçu.

12. Produit de programme logiciel comprenant des instructions permettant à un processeur d'exécuter le procédé selon l'une quelconque des revendications précédentes.

13. Unité de commande (10) configurée pour commander l'accès à au moins deux systèmes de communication sans fil coexistants,
lesquels systèmes de communication sans fil coexistants sont configurés pour partager un spectre de fréquences dans une zone de couverture commune,
chaque nœud étant configuré pour accéder à au moins un système de communication sans fil en fonction d'au moins un paramètre d'accès, la zone de couverture commune (1) étant divisée en au moins deux zones géographiquement définies (Z1, Z2, Z3, Z4), et
chaque nœud dans la zone de couverture commune étant associé à au moins une zone géographiquement définie, l'unité de commande comprenant :
une unité de réception (11) configurée pour recevoir des données d'utilisation indiquant l'utilisation du spectre de fréquences partagé dans la zone géographiquement définie,
une unité de détermination (12) configurée pour :
- déterminer, en utilisant les données d'utilisation, une relation entre les utilisations partagées respectives du spectre des fréquences des systèmes de communication sans fil par zone géographique définie, et
- déterminer pour chaque zone géographiquement définie, en utilisant la relation entre les utilisations respectives du spectre des fréquences, au moins un paramètre d'accès configuré pour permettre à au moins un nœud associé à la zone respective d'accéder à au moins un des systèmes de communication sans fil coexistants, et
une unité de transmission (13) configurée pour transmettre les paramètres d'accès aux nœuds respectifs.

14. Nœud (2, 3) configuré pour l'accès à au moins deux systèmes de communication sans fil coexistants,
lesquels systèmes de communication sans fil coexistants sont configurés pour partager un spectre de fréquences dans une zone de couverture commune,
la zone de couverture commune (1) étant divisée en au moins deux zones géographiquement définies (Z1, Z2, Z3, Z4), et
le nœud étant configuré pour s'associer à au moins une zone géographiquement définie lorsqu'il se trouve dans la zone de couverture commune,
le nœud comprenant :
une unité d'association configurée pour associer le nœud à une zone géographiquement définie,
une unité de transmission configurée pour transmettre à une unité de commande des données d'utilisation indiquant l'utilisation du spectre de fréquences partagé dans la zone géographiquement définie,
une unité de réception destinée à recevoir au moins un paramètre d'accès de l'unité de commande, et
une unité de commande d'accès configurée pour accéder à au moins un système de communication sans fil en fonction de l'au moins un paramètre d'accès.

15. Nœud selon la revendication 14, qui est un nœud mobile.

16. Nœud selon la revendication 14 ou 15, qui est un nœud fixe.

17. Système de communication sans fil, comprenant au moins une unité de commande selon la revendication 13 et au moins un nœud selon l'une quelconque des revendications 14 à 16.
